# EUROPEAN PATENT APPLICATION

(11) **EP 3 343 175 A1**
(43) Date of publication of application: **04.07.2018**
(21) Application number: 17205094.0
(22) Date of filing: 04.12.2017
(51) Int. Cl.: G01C 21/34, G01C 21/36

(54) **IN-VEHICLE DEVICE AND ROUTE INFORMATION PRESENTATION SYSTEM**

(30) Priority: 21.12.2016 JP 2016248118
(71) Applicant: TOYOTA JIDOSHA KABUSHIKI KAISHA, Toyota-shi, Aichi, 471-8571 (JP)
(72) Inventor: SEKIZAWA, Shogo, Toyota-shi, Aichi 471-8571 (JP); OHTSUKA, Shinichiro, Toyota-shi, Aichi 471-8571 (JP); IDO, Daisuke, Toyota-shi, Aichi 471-8571 (JP); OKABE, Makoto, Toyota-shi, Aichi 471-8571 (JP); KIMATA, Takanori, Toyota-shi, Aichi 471-8571 (JP)
(74) Representative: TBK

(57) **Abstract**

An in-vehicle device (100) includes a recognition unit (109) configured to recognize a host vehicle user, an acquisition unit (101) configured to acquire a current location and a destination of the host vehicle, a transmission unit configured to transmit a first signal indicating the host vehicle user, the current location, and the destination to an external device (20) outside the host vehicle, a reception unit configured to receive a second signal indicating a traveling route from the current location to the destination from the external device, the traveling route being searched using i) a first feeling map and ii) a second feeling map in the external device, and a presentation unit (104) configured to present the traveling route indicated by the second signal.

## Description

### BACKGROUND OF THE INVENTION

### 1. Field of the Invention

The present invention relates to a technical field of an in-vehicle device and a route information presentation system that accumulate information relating to a user of a vehicle and present a traveling route based on the accumulated information.

### 2. Description of Related Art

As this kind of device, for example, a device that extracts a preference corresponding to a current traveling purpose of a driver, detects a feature of each of a plurality of traveling routes from a current location to a destination, and selects a traveling route having a feature conforming to the extracted preference has been suggested (see Japanese Unexamined Patent Application Publication No. 2015-227785 (JP 2015-227785 A)). Alternatively, a device that searches for a traveling route from a current location to a destination using a Dijkstra's algorithm and sets a calculation reference of a cost value such that a traveling route according to a preference of a user is searched has been suggested (see Japanese Unexamined Patent Application Publication No. 2016-180600 (JP 2016-180600 A)). Alternatively, a device that acquires a preferential road according to a preference of a user based on a traveling history, determines a priority of a facility searched by designation of the user based on the preferential road, and guides the searched facility according to the determined priority has been suggested (see Japanese Unexamined Patent Application Publication No. 2016-186461 (JP 2016-186461 A)).

### SUMMARY OF THE INVENTION

According to the above-described related art, a preference of a user is estimated from a feature (for example, a traveling time, the presence or absence of use of a toll road, the number of lanes, the number of traffic signals, or the like) of a traveling route included in a traveling history. However, for example, even a road that has road classification or a structure, such as the number of lanes, similar to a road (that is, a road likely to be estimated that the user prefers) with a comparatively high traveling frequency does not always conform to the preference of the user according to a surrounding environment, such as the number of parked vehicles or pedestrians or circumstances of buildings or roadside trees around a road. That is, there is room for improvement in the above-described related art in which a preference of a user is estimated from a feature of a road and a traveling route is suggested based on the estimated preference.

The invention provides an in-vehicle device and a route information presentation system capable of presenting an appropriate traveling route to a user.

A first aspect of the invention relates to an in-vehicle device including a recognition unit, an acquisition unit, a transmission unit, a reception unit, and a presentation unit. The recognition unit is configured to recognize a user on a host vehicle as a host vehicle user. The acquisition unit is configured to acquire a current location and a destination of the host vehicle. The transmission unit is configured to transmit a first signal indicating the host vehicle user, the current location, and the destination to an external device outside the host vehicle. The reception unit is configured to receive a second signal indicating a traveling route from the current location to the destination from the external device. The traveling route is searched using i) a first feeling map and ii) a second feeling map in the external device. The first feeling map is information generated based on feeling information corresponding to the host vehicle user among a plurality of kinds of feeling information corresponding to a plurality of users and indicating a feeling state at each of a plurality of points on a road and map information, and is information with a feeling state of the host vehicle user at each of the points on the road indicated by the feeling information corresponding to the host vehicle user associated with the map information. The second feeling map is information generated based on at least a part of the feeling information and the map information, and is information with a feeling state of each of the users at each of the points on the road indicated by at least a part of the feeling information associated with the map information. The presentation unit is configured to present the traveling route indicated by the second signal.

The "first feeling map" is information with a feeling (for example, joy, anger, grief, or pleasure) of the host vehicle user at each of the points on the road associated with the map information, and as a concept, for example, information indicating a distribution of feelings of the host vehicle user on a map. Similarly, the "second feeling map" is information with a feeling of each of the users at each of the points on the road associated with the map information, and as a concept, for example, information indicating a distribution of feelings of the users on a map. The second feeling map may be information with a feeling of each user extracted according to arbitrary conditions of, for example, a time zone, a day of the week, a season, user age, and sex associated with the map information.

It is possible to estimate a road that the host vehicle user will prefer and a road that the host vehicle user should avoid from a distribution of positive feelings (for example, "joy", "pleasure") indicated by the first feeling map and a distribution of negative feelings (for example, "anger", "grief") indicated by the first feeling map. Furthermore, it is possible to estimate a road that the host vehicle user will generally prefer and a road that the host vehicle user should avoid from a distribution of positive feelings indicated by the second feeling map and a distribution of negative feelings indicated by the second feeling map. For this reason, the traveling route from the current location to the destination searched using the first feeling map and the second feeling map is expected to be a traveling route preferable to the host vehicle user. Accordingly, with the in-vehicle device, it is possible to present an appropriate traveling route to the host vehicle user.

The in-vehicle device according to the first aspect of the invention may further include a feeling state estimation unit configured to detect a biological information of the host vehicle user and estimate a feeling state of the host vehicle user based on the detected biological information. The transmission unit may be configured to further transmit a third signal indicating the estimated feeling state and information with a position of the host vehicle and the host vehicle user associated with each other to the external device. According to the first aspect of the invention, it is possible to collect the feeling states of the host vehicle user at each point when the host vehicle travels, and to accumulate information indicating the feeling of the host vehicle user in the external device. The feeling state is estimated based on, for example, expression, motion, or speech, as the biological information.

The in-vehicle device according to the first aspect of the invention may further include an in-vehicle camera configured to image the inside of a vehicle cabin of the host vehicle. The feeling state estimation unit may be configured to detect a user from an image captured by the in-vehicle camera.

In the in-vehicle device according to the first aspect of the invention, the biological information may include face information of the user. The feeling state estimation unit may be configured to recognize a facial expression of the detected user and estimate a feeling state of the host vehicle user based on a feature of the recognized facial expression.

In the in-vehicle device according to the first aspect of the invention, the biological information may include a gesture of the user. The feeling state estimation unit may be configured to recognize a gesture of the detected user and estimate a feeling state of the host vehicle user based on a feature of the recognized gesture.

The in-vehicle device according to the first aspect of the invention may further include a microphone configured to detect sound inside a vehicle cabin of the host vehicle. The biological information may include speech of the user. The feeling state estimation unit may be configured to recognize speech from sound inside the vehicle cabin detected by the microphone and estimate a feeling state of the host vehicle user based on a feature of the recognized speech.

In the in-vehicle device according to the first aspect of the invention, the second feeling map may be information with a feeling of each of the users extracted according to arbitrary conditions of a time zone, a day of the week, a season, user age, and sex associated with the map information.

A second aspect of the invention relates to a route information presentation system including an in-vehicle device, and an external device provided outside a vehicle in which the in-vehicle device is mounted. The in-vehicle device is configured to recognize a user in the vehicle as a host vehicle user, acquire a current location and a destination of the vehicle, and transmit a first signal indicating the host vehicle user, the current location, and the destination to the external device. The external device includes a feeling database configured to store a plurality of kinds of feeling information corresponding to a plurality of users and indicating a feeling state at each of a plurality of points on a road, and a map database configured to store map information. The external device is configured to generate a first feeling map based on feeling information corresponding to the host vehicle user indicated by the first signal among the stored feeling information and the stored map information, the first feeling map being information with a feeling state of the host vehicle user at each of the points on the road indicated by the feeling information corresponding to the host vehicle user associated with the stored map information, generate a second feeling map based on at least a part of the stored feeling information and the stored map information, the second feeling map being information with a feeling state of each of the users at each of the points on the road indicated by at least a part of the stored feeling information associated with the stored map information, search for a traveling route from the current location indicated by the first signal to the destination indicated by the first signal using the first feeling map and the second feeling map, and transmit a second signal indicated by the searched traveling route to the vehicle. The in-vehicle device is further configured to present the traveling route indicated by received second signal.

With the route information presentation system according to the second aspect of the invention, similarly to the in-vehicle device according to the first aspect of the invention, it is possible to present an appropriate traveling route to the host vehicle user. In particular, the second feeling map may be generated based on feeling information (that is, a part of the feeling information) extracted according to arbitrary conditions of, for example, a time zone, a day of the week, a season, user age, and sex among the feeling information.

In the route information presentation system according to the second aspect of the invention, the in-vehicle device may be configured to detect biological information of the host vehicle user and estimate feeling state of the host vehicle user based on the detected biological information and transmit a third signal indicating information with the estimated feeling state associated with a position of the host vehicle and the host vehicle user to the external device. The feeling database may be constructed or updated by information indicated by the third signal. According to the second aspect of the invention, it is possible to comparatively easily collect the feeling states of the host vehicle user at each point when the vehicle travels, and to construct or update the feeling database with the collected feeling states.

The route information presentation system according to the second aspect of the invention may further include an in-vehicle camera configured to image the inside of a vehicle cabin of the host vehicle. The in-vehicle device may be configured to detect a user from an image captured by the in-vehicle camera.

In the route information presentation system according to the second aspect of the invention, the biological information may be face information of the user. The in-vehicle device may be configured to recognize a facial expression of the detected user and estimate a feeling state of the host vehicle user based on a feature of the recognized facial expression.

In the route information presentation system according to the second aspect of the invention, the biological information may be a gesture of the user. The in-vehicle device may be configured to recognize a gesture of the detected user and estimate a feeling state of the host vehicle user based on a feature of the recognized gesture.

The route information presentation system according to the second aspect of the invention may further include a microphone configured to detect sound inside a vehicle cabin of the host vehicle. The biological information may be speech of the user. The in-vehicle device may be configured to recognize speech from sound inside the vehicle cabin detected by the microphone and estimate a feeling state of the host vehicle user based on a feature of the recognized speech.

In the route information presentation system according to the second aspect of the invention, the second feeling map may be information with a feeling of each of the users extracted according to arbitrary conditions of a time zone, a day of the week, a season, user age, and sex associated with the map information.

The operation and other advantages of the invention will become apparent from an embodiment described below.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing the configuration of a route information presentation system according to an embodiment;
FIG. 2A is a flowchart showing a feeling estimation operation according to the embodiment;
FIG. 2B is a flowchart showing a construction operation of a general feeling database according to the embodiment;
FIG. 3A is a diagram showing an example of a profiling method of a user according to the embodiment;
FIG. 3B is a diagram showing an example of the profiling method of the user according to the embodiment;
FIG. 4 is a diagram showing an example of a general feeling map according to the embodiment;
FIG. 5A is a diagram showing an example of a calculation method of a traveling route according to the embodiment;
FIG. 5B is a diagram showing an example of the calculation method of the traveling route according to the embodiment;
FIG. 6 is a diagram showing an example of a display screen of a traveling route according to the embodiment;
FIG. 7A is a flowchart showing a traveling route search and presentation operation according to the embodiment; and
FIG. 7B is a flowchart showing the traveling route search and presentation operation according to the embodiment.

### DETAILED DESCRIPTION OF EMBODIMENTS

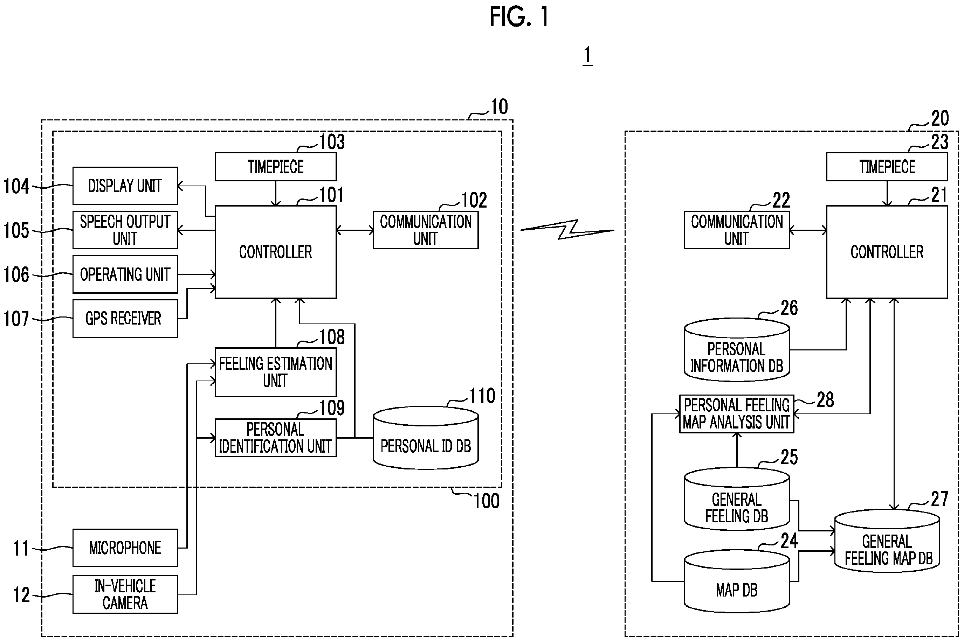

A route information presentation system according to an embodiment will be described referring to FIGS. 1 to 7B.

### System Configuration

The configuration of the route information presentation system according to the embodiment will be described referring to FIG. 1. FIG. 1 is a block diagram showing the configuration of the route information presentation system according to the embodiment.

In FIG. 1, the route information presentation system 1 includes a navigation device 100 mounted in a vehicle 10, and a center 20 provided outside the vehicle 10. The vehicle 10 includes, in addition to the navigation device 100, a microphone 11 that detects sound inside a vehicle cabin, and an in-vehicle camera 12 that images the inside of the vehicle cabin. The "navigation device 100" and the "center 20" according to the embodiment are examples of an "in-vehicle device" and an "external device", respectively.

The navigation device 100 includes a controller 101, a communication unit 102, a timepiece 103, a display unit 104, a speech output unit 105, an operating unit 106, a global positioning system (GPS) reception unit 107, a feeling estimation unit 108, a personal identification unit 109, and a personal ID database 110.

The center 20 includes a controller 21, a communication unit 22, a timepiece 23, a map database 24, a general feeling database 25, a personal information database 26, a general feeling map database 27, and a personal feeling map analysis unit 28.

### Feeling Data Accumulation

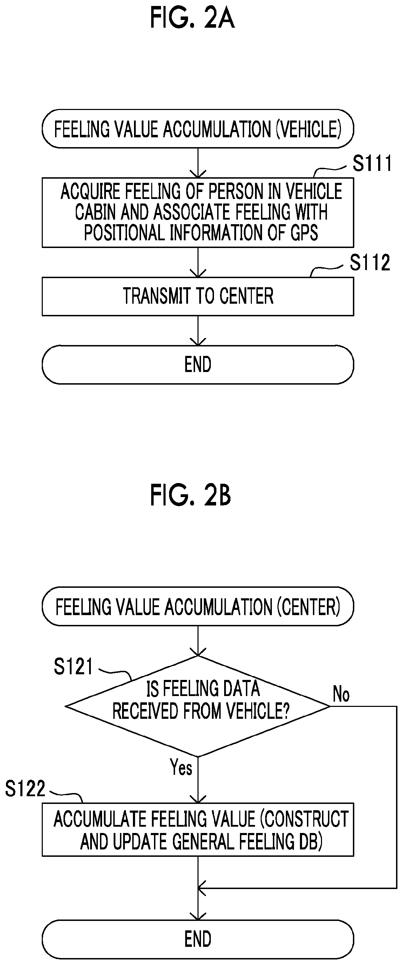

Next, an estimation method of a feeling of a user of the vehicle 10 that is performed on the vehicle 10 side and a construction method of the general feeling database 25 that is performed on the center 20 side will be described referring to flowcharts of FIGS. 2A and 2B, in addition to the FIG. 1.

### 1. Feeling Estimation

The feeling estimation unit 108 of the navigation device 100 estimates a feeling of the user based on a facial expression, a gesture, and a tone of the user who is on the vehicle 10.

Specifically, the feeling estimation unit 108 detects a user (detects at least a face area of the user) from an image captured by the in-vehicle camera 12 and recognizes a facial expression of the detected user. The feeling estimation unit 108 calculates the degree of each of a plurality of feelings (for example, "neutral", "happy", "anger", "fear", "fatigue", and the like) based on a feature (for example, a feature of a shape of each of both eyes, an eyebrow, and a mouth) of the recognized facial expression. The feeling estimation unit 108 detects a user from an image captured by the in-vehicle camera 12 and recognizes a gesture (that is, motion) of the detected user. The feeling estimation unit 108 calculates the degree of each of the feelings based on a feature (for example, a facial expression, a positional relationship between a face and a hand, a line of sight or a face direction, or the like) of the recognized gesture.

The feeling estimation unit 108 recognizes speech from sound inside the vehicle cabin detected by the microphone 11 and calculates the degree of each of the feelings based on a feature (for example, a frequency distribution or the like) of the recognized speech (that is, a tone). It is desirable that the microphone 11 is a directional microphone. Then, it is desirable that a plurality of microphones 11 are provided in the vehicle 10. With such a configuration, since it is possible to specify a generation source (that is, a sound source) of speech from the directivity of the microphones, even in a case where a plurality of people is on the vehicle 10 or a case where a car audio is operated, it is possible to recognize the speech of the user.

The reason that the feeling estimation unit 108 is configured to calculate the degree of each of the feelings is because, in a case where a feeling is actually evoked, a single feeling rarely appears and a mixed feeling in which several basic feelings are mixed often appears.

The feeling estimation unit 108 obtains the overall degree of each of the feelings by taking, for example, a simple average of (i) the degree of each of the feelings based on the facial expression, (ii) the degree of each of the feelings based on the gesture, and (iii) the degree of each of the feelings based on the tone or taking a weighted average using weights learned in advance.

The feeling estimation unit 108 obtains (i) the overall degree of each of the feelings in a comparatively short first period (for example, one second or the like) and (ii) the overall degree of each of the feelings in a second period (for example, 30 seconds or the like) longer than the first period in order to focus on temporal change in feeling.

When a person undergoes change in feeling (mental state), the person often shows change in feeling (mental state) with a facial expression, a gesture, or a tone consciously or unconsciously. For this reason, the overall degree of each of the feelings in the comparatively short first period is obtained, whereby a complicated feeling or a true feeling of the user is expected to be estimated. On the other hand, the overall degree of each of the feelings in the comparatively long second period is obtained, whereby noise is reduced and reliability of estimation by the feeling estimation unit 108 can be further improved.

The feeling estimation unit 108 finally estimates the feeling of the user based on the degree of each of the feelings in the first period and the degree of each of the feelings in the second period. At this time, the feeling estimation unit 108 digitalizes the feeling of the user based on the degree of each of the feelings as well as feeling classification (for example, in a case where digitalization is made in a range of 0 to 100, "joy 50" or the like).

The feeling estimation unit 108 estimates the feeling classification as follows. That is, for example, in a case where the degree of "fear" is the highest in the first period and the degree of "happy" is the highest in the second period, the feeling estimation unit 108 estimates the feeling of the user as "fear" (i) under a condition that the degree of "fear" in the first period is greater than a predetermined threshold and estimates the feeling of the user as "happy" (ii) under a condition that the degree of "fear" in the first period is equal or less than the predetermined threshold. The reason is because, in a case where the degree of "fear" in the first period is greater than the predetermined threshold, there is a high possibility that "fear" is a true feeling of the user that appears for an instant, and in a case where the degree of "fear" in the first period is equal to or less than the predetermined threshold, there is a high possibility that "fear" is noise.

Now, in the flowchart shown in FIG. 2A, the controller 101 of the navigation device 100 acquires the feeling of the user estimated by the feeling estimation unit 108 and an ID of the user specified by the personal identification unit 109. The personal identification unit 109 identifies the user on the vehicle 10 based on the image captured by the in-vehicle camera 12 and specifies the ID of the identified user with reference to the personal ID database.

In addition, the controller 101 acquires a position of the vehicle 10 based on a GPS signal received by the GPS reception unit 107 and acquires a time from the timepiece 103. Subsequently, the controller 101 associates the feeling of the user, the ID of the user, the position, and the time with one another (Step S111). The position of the vehicle 10 and the time may be corrected in consideration of a time of estimation in the feeling estimation unit 108.

The controller 101 transmits a signal indicating the feeling of the user, the ID of the user, the position, and the time associated with one another to the center 20 through the communication unit 102 (Step S112). Thereafter, the controller 101 performs the processing of Step S111 again after a first predetermined time elapses.

The feeling estimation unit 108 may perform feeling estimation for all occupants of the vehicle 10, or may perform feeling estimation for a driver among the occupants of the vehicle 10. The feeling estimation unit 108 may estimate the feeling of the user from, for example, a blood pressure or a pulse, in addition to the facial expression, the gesture, and the tone. The "facial expression", the "gesture", and the "tone (speech)" according to the embodiment are an example of "biological information".

### 2. General Feeling Database Construction

The controller 21 of the center 20 sequentially acquires the feeling of the user, the ID of the user, the position, and the time associated with one another from each of a plurality of vehicles including the vehicle 10. The controller 21 accumulates the feeling of the user, the ID of the user, the position, and the time associated with one another for each ID of the user, thereby constructing the general feeling database 25. That is, it can be said that the general feeling database 25 is a collection of the feeling databases for the users.

In a case where a feeling of a certain user at a certain point is estimated multiple times, the controller 21 may classify the feelings by time (or time zone) and may accumulate the feeling of the user, or may obtain (i) a simplified value, (ii) a sum of products, (iii) an average, or (iv) a normalized value of the digitalized feelings and may accumulate the obtained value as the feeling of the user.

Now, in the flowchart shown in FIG. 2B, the controller 21 determines whether or not data (that is, the feeling of the user, the ID of the user, the position, and the time associated with one another) indicating the feeling is received from an arbitrary vehicle including the vehicle 10 (Step S121). In a case where the above-described determination is made that data indicating the feeling is not received (Step S121: No), the controller 21 performs the determination of Step S121 again after a second predetermined time elapses.

In a case where the determination of Step S121 is made that data indicating the feeling is received (Step S121: Yes), the controller 21 constructs or updates the general feeling database 25 based on the received data indicating the feeling (Step S122).

### Search and Presentation of Traveling Route

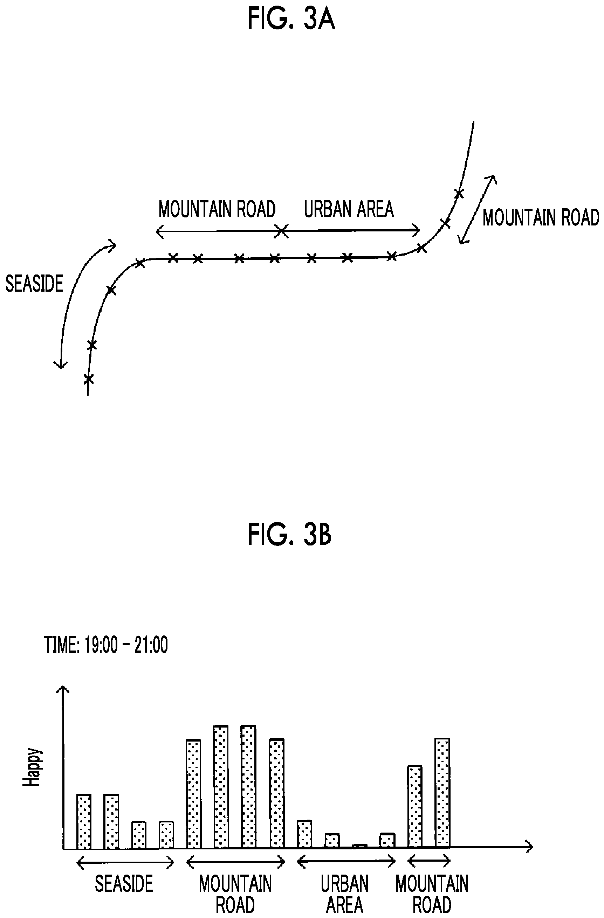

Next, a search and presentation method of a traveling route in the route information presentation system 1 will be described referring to FIGS. 3A to 7B, in addition to FIG. 1.

The map database 24 of the center 20 stores, in addition to the map information, information of destination candidates (for example, stations, hospitals, hotels, resorts, shops, offices, and the like) and feature information (for example, seaside, good scenery, a small gradient, school zones, and the like) of roads. The personal information database 26 stores the ID of the user in association with a profile (for example, age, sex, or the like) of the user.

The personal feeling map analysis unit 28 generates a personal feeling map from a feeling database related to an arbitrary user (for example, a user indicated by the controller 21) accumulated in the general feeling database 25 and the map information stored in the map database 24. The personal feeling map is information with the feeling of the user at each of a plurality of points on a road associated with the map information.

The personal feeling map analysis unit 28 performs profiling of the user corresponding to the personal feeling map based on the generated personal feeling map. As a result of the profiling, comparatively frequent feelings, preferences, desirable destination candidates, and the like of the user are specified or estimated. For example, in a case where the feeling "happy" is associated with a mountain road in a night time zone, "a preference for a mountain road at night" is estimated as a preference. Alternatively, in a case where the intensity of the feeling "happy" is comparatively large around a baseball park, the "baseball park" is estimated as a desirable destination candidate.

The profiling by the personal feeling map analysis unit 28 will be further described referring to FIGS. 3A and 3B. In FIG. 3A, a solid line indicates a traveling route along which the vehicle 10 travels in a period of 19:00 to 21:00. A symbol "x" of FIG. 3A indicates a point (that is, a position associated with a feeling) where the feeling of the user of the vehicle 10 is estimated. It can be said that FIG. 3A is an example of a personal feeling map with a traveling route (that is, a map) associated with feeling data of the user of the vehicle 10. FIG. 3B shows change in the degree of feeling (in this case, "happy") of the user when the vehicle 10 travels along the traveling route shown in FIG. 3A.

The personal feeling map analysis unit 28 extracts feeling data related to the user of the vehicle 10 in a certain time zone (in FIGS. 3A and 3B, 19:00 to 21:00) from the general feeling database 25 and generates the personal feeling map shown in FIG. 3A from the map information stored in the map database 24.

Next, the personal feeling map analysis unit 28 calculates, for example, an average value of the feeling of the user of the vehicle 10 for each feature of a road based on the feature information (in FIGS. 3A and 3B, "seaside", "mountain road", "urban area") of the roads included in the map information. In the example shown in FIG. 3B, it is assumed that an average value of "feeling" on the "seaside" is 30, an average value of "happy" on the "mountain road" is 80, and an average value of "happy" in the "urban area" is 10.

Next, the personal feeling map analysis unit 28 performs profiling of the user of the vehicle 10 with reference to, for example, the average value of the feeling for each feature of the road. In the example shown in FIGS. 3A and 3B, since the average value of "happy" on the "mountain road" projects from and are greater than other average values, the personal feeling map analysis unit 28 estimates, for example, "a preference for a mountain road at night" as a preference for the user of the vehicle 10.

The personal feeling map analysis unit 28 transmits the result of the profiling to the controller 21 in association with the ID of the user who is subjected to the profiling. The controller 21 updates the profile stored in the personal information database 26 and associated with the ID of the user based on the ID of the user and the result of the profiling.

The personal feeling map analysis unit 28 may generate the personal feeling map of the user again regularly or irregularly in consideration of an update frequency or the like of the feeling database (as a part of the general feeling database 25) related to a certain user and may perform profiling.

In a case where the signal indicating the ID of the user and the current location and the destination of the vehicle 10 is received from the vehicle 10, the controller 21 of the center 20 acquires the profile of the user from the personal information database 26 based on the ID of the user indicated by the received signal. In a case where the analysis (that is, the profiling of the user) of the personal feeling map is already performed by the personal feeling map analysis unit 28, in addition to age or sex, for example, a preference, a desirable destination candidate, and the like are included in the profile acquired from the personal information database 26.

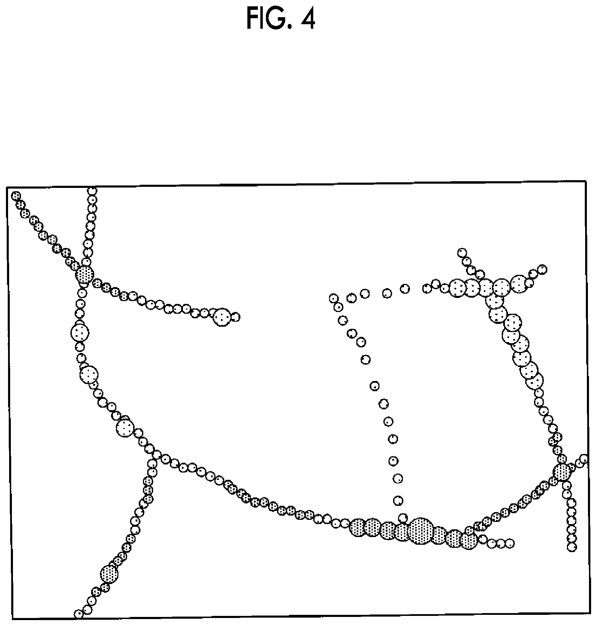

The controller 21 generates one or a plurality of general feeling maps from the general feeling database 25 and the map information stored in the map database 24 based on the profile acquired from the personal information database 26 and a current time acquired from the timepiece 23. Similarly to the above-described personal feeling map, the general feeling map is information with the feeling of each of a plurality of users at each of the points on the road associated with the map information (see FIG. 4). In FIG. 4, a dark halftone circle and a light halftone circle represent different feelings from each other. The size of a halftone circle represents the intensity (degree) of the feeling.

The controller 21 can generate a general feeling map under arbitrary conditions. In a case where the profile acquired from the personal information database 26 is, for example, "twenties, man", and the current time is "19:20", the controller 21 extracts, for example, a feeling of a man in his twenties at 19:00 to 20:00 from the general feeling database 25 and a position associated with the feeling, and generates a general feeling map from the extracted feeling and position and the map information. In a case where the profile acquired from the personal information database 26 is, for example, "a preference for traveling on a mountain road, woman", and the current time is "9:50", the controller 21 extracts, for example, a feeling of a woman at 9:00 to 10:00 and a position associated with the feeling from the general feeling database 25, and generates a general feeling map from the extracted feeling and position and the map information.

The controller 21 calculates a traveling route from a current location of the vehicle 10 to a destination based on the acquired profile and the generated one or a plurality of general feeling maps. At this time, the controller 21 may calculate one traveling route or may calculate a plurality of traveling routes from one general feeling map. Alternatively, the controller 21 may calculate one traveling route from a plurality of general feeling maps.

Specifically, the controller 21 calculates a traveling route from a current location of the vehicle 10 to a destination such that a comparatively large number of points associated with, for example, a positive feeling, such as "happy", indicated by the general feeling map generated under the above-described conditions of "twenties, man" and "19:20" are included, or no or not many points associated with, for example, a negative feeling, such as "anger", are included. In this case, since there is no condition (that is, a profile) other than "twenties, man", in calculating the traveling route, a feeling is primarily considered.

Alternatively, the controller 21 calculates a traveling route from a current location of the vehicle 10 to a destination such that a comparatively large number of points corresponding to a mountain road among points associated with, for example, a positive feeling indicated by the general feeling map generated under the above-described conditions of "a preference for traveling on a mountain road" and "9:50" are included. In this case, since there is the condition of "a preference for traveling on a mountain road, woman", in calculating the traveling route, in addition to a feeling, topography is considered.

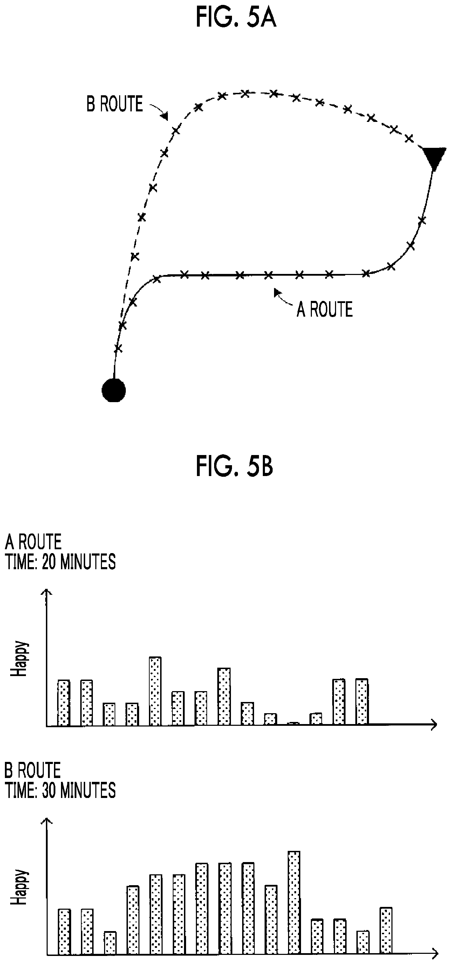

The calculation of the traveling route by the controller 21 will be further described referring to FIGS. 5A and 5B. In FIG. 5A, it is assumed that a black circle indicates the current location of the vehicle 10, and a black triangle indicates the destination of the vehicle 10. An "A route" and a "B route" are candidates of a traveling route from the current location of the vehicle 10 to the destination. FIG. 5B shows (i) change in the degree of feeling (in this case, "happy") in a case of traveling along the A route (upper side) and (ii) change in the degree of feeling in a case of traveling along the B route (lower side) extracted from the general feeling map.

The controller 21 generates a general feeling map from the general feeling database 25 and the map information based on the profile related to the user of the vehicle 10 and the current time acquired from the timepiece 23. The controller 21 calculates traveling route candidates from the current location of the vehicle 10 to the destination based on the map information in parallel with the generation of the general feeling map.

Next, the controller 21 obtains feeling features related to the traveling route candidates. In the example shown in FIG. 5B, in regard to the A route, it is assumed that an average value of "happy" is 45, a maximum value of "happy" is 60, and the number of points where the degree of "happy" is equal to or greater than, for example, 70 is zero. In regard to the B route, it is assumed that an average value of "happy" is 70, a maximum value of "happy" is 90, and the number of points where the degree of "happy" is equal to or greater than, for example, 70 is six.

Next, the controller 21 sets a traveling route candidate suitable for the user of the vehicle 10 as a traveling route based on the feeling feature related to the traveling route candidates. In the examples shown in FIGS. 5A and 5B, since the B route is superior to the A route in "happy", the controller 21 sets the B route as the traveling route. It should be noted that superiority is determined in the average value, the maximum value, and the number of points. Instead of or in addition to the average value, the maximum value, and the number of points, other indexes may be used in determining a traveling route.

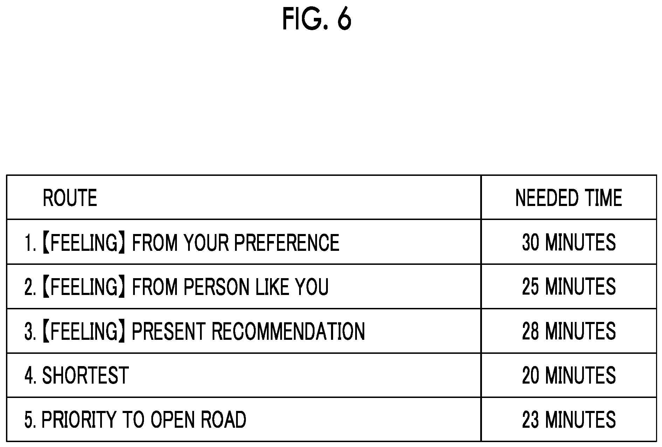

The controller 21 transmits a signal indicating route information including the calculated traveling route to the vehicle 10 through the communication unit 22. In a case where the signal indicating the route information is received from the center 20, the controller 101 of the navigation device 100 of the vehicle 10 displays information related to the traveling route indicated by the received signal on the display unit 104. Here, "information related to the traveling route" is not limited to the traveling route itself, and may be a document or the like (see FIG. 6) indicating the feature of the traveling route (or a reference used in calculating the traveling route).

The controller 21 may generate, for example, a general feeling map with comparatively high versatility, such as a general feeling map by age, in advance, and may store the general feeling map in the general feeling map database 27. In addition, the controller 21 may update the general feeling map stored in the general feeling map database 27 regularly or irregularly.

The "general feeling database 25", the "personal feeling map", and the "general feeling map" according to the embodiment are examples, of a "feeling database", a "first feeling map", and a "second feeling map", respectively.

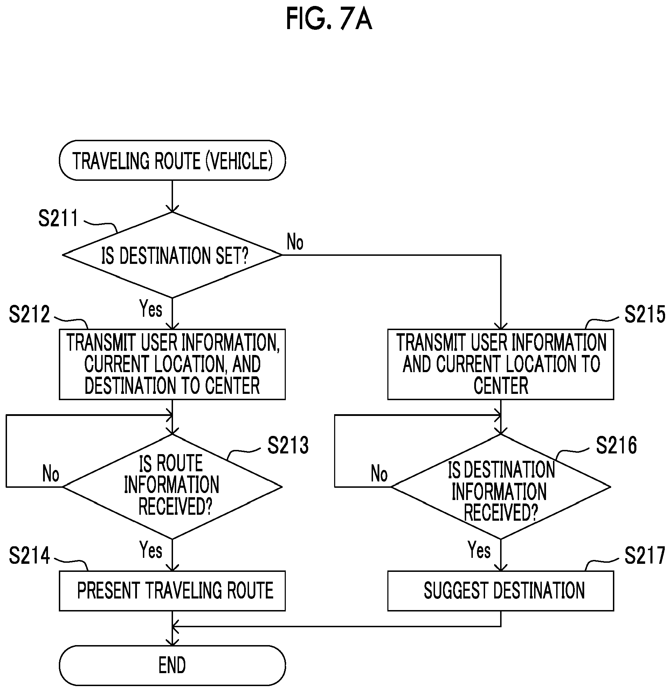

Now, in FIG. 7A, the controller 101 of the navigation device 100 determines whether or not there is a destination setting (Step S211). In a case where a destination is set through the operating unit 106 as a user interface, the controller 101 determines that there is a destination setting.

In a case where the determination of Step S211 is made that there is the destination setting (Step S211: Yes), the controller 101 transmits a signal indicating the ID of the user specified by the personal identification unit 109, the position of the vehicle 10 specified based on the GPS signal received by the GPS reception unit 107, and the destination to the center 20 through the communication unit 102 (Step S212).

Next, the controller 101 determines whether or not the signal indicating the route information is received from the center 20 (Step S213). In a case where the above-described determination is made that the signal indicating the route information is not received (Step S213: No), the controller 101 performs the determination of Step S213 again (that is, the controller 101 is in a standby state until the signal indicating the route information is received). Even when a third predetermined time has elapsed after the signal indicating the ID of the user and the like is transmitted in the processing of Step S212, in a case where the signal indicating the route information is not received, the controller 101 may temporarily end the processing shown in FIG. 7A.

In a case where the determination of Step S213 is made that the signal indicating the route information is received (Step S213: Yes), the controller 101 displays information related to the traveling route indicated by the received signal on the display unit 104 (for example, see "1. [feeling] from your preference", "2. [feeling] from person like you", "3. [feeling] present recommendation" of FIG. 6) (Step S214).

A traveling route of "1. [feeling] from your preference" of FIG. 6 is a traveling route calculated from a general feeling map in consideration of, for example, "a preference for traveling on a mountain road" or a preference for traveling on a seaside road" included in a profile, such as "a preference for traveling on a mountain road, woman" or "a preference for traveling on a seaside road, man". A traveling route of "2. [feeling] from person like you" of FIG. 6 is a traveling route calculated from, for example, a general feeling map by age or a general feeling map generated when a feeling of a user having the same preference, such as "a preference for traveling on a seaside road" is extracted from the general feeling database 25. A traveling route of "3. [feeling] present recommendation" of FIG. 6 is a traveling route calculated from, for example, a general feeling map by time zone or a general feeling map generated when a feeling for the last 30 minutes is extracted from the general feeling database 25.

The controller 101 may calculate the traveling route from the current location of the vehicle 10 to the destination based on map information (not shown) in the navigation device 100 in parallel with the processing shown in FIG. 7A. Then, in the processing of Step S214, the controller 101 may display information related to the calculated traveling route on the display unit 104 (for example, see "4. shortest", "5. priority to open road" of FIG. 6), in addition to information related to the traveling route indicated by the received signal.

For example, when information of the traveling route shown in FIG. 6 is displayed on the display unit 104, in a case where one traveling route is selected by the user of the vehicle 10 through the operating unit 106, the controller 101 performs appropriate control such that the display unit 104 and the speech output unit 105 guide the vehicle 10 to the selected traveling route.

In a case where the determination of Step S211 is made that a destination is not set (Step S211: No), the controller 101 transmits the signal indicating the ID of the user specified by the personal identification unit 109 and the position of the vehicle 10 specified based on the GPS signal received by the GPS reception unit 107 to the center 20 through the communication unit 102 (Step S215).

Next, the controller 101 determines whether or not a signal indicating destination information is received from the center 20 (Step S216). The "destination information" is information indicating a point (so-called dropping destination) by which the vehicle is recommended to pass and/or a route (so-called dropping route) along which the vehicle is recommended to travel.

In a case where the determination of Step S216 is made that the signal indicating the destination information is not received (Step S216: No), the controller 101 performs the determination of Step S216 again (that is, the controller 101 is in a standby state until the signal indicating the destination information is received). Even when a fourth predetermined time has been elapsed after the signal indicating the ID of the user and the like is transmitted in the processing of Step S215, in a case where the signal indicating the destination information is not received, the controller 101 may temporarily end the processing shown in FIG. 7A.

In a case where the determination of Step S216 is made that the signal indicating the destination information is received (Step S216: Yes), the controller 101 displays information related to the destination indicated by the received signal on the display unit 104, thereby suggesting the destination (Step S217).

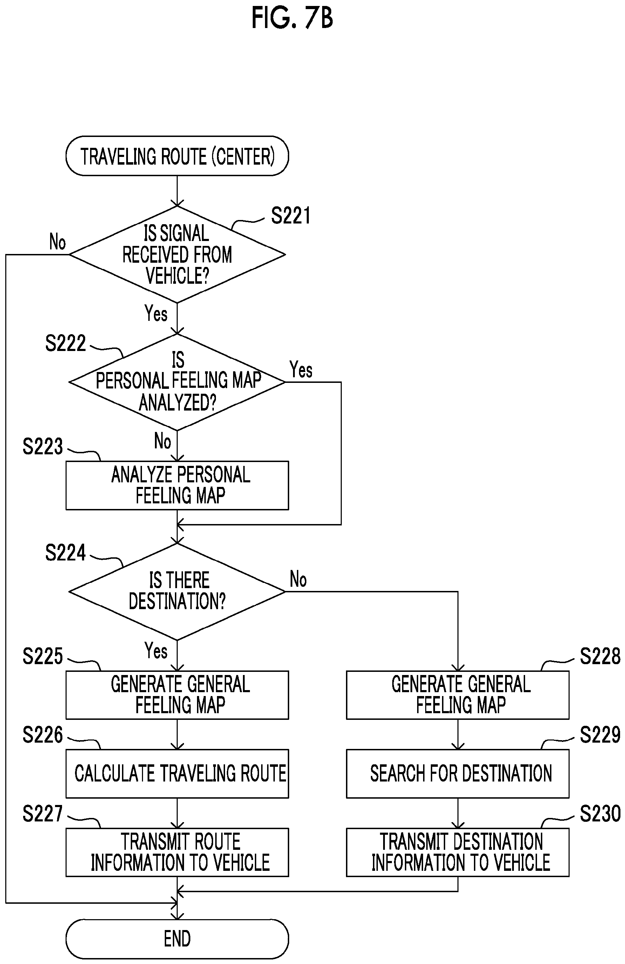

In FIG. 7B, the controller 21 of the center 20 determines whether or not a vehicle signal including at least an ID of a user and a position of a vehicle is received from an arbitrary vehicle including the vehicle 10 (Step S221). In a case where the above-described determination is made that the vehicle signal is not received (Step S211: No), the controller 21 performs the determination of Step S221 again after a fifth predetermined time elapses.

In a case where the determination of Step S221 is made that the vehicle signal is received (Step S221: Yes), the controller 21 determines whether or not a personal feeling map corresponding to the ID of the user included in the vehicle signal is analyzed (Step S222).

In a case where the determination of Step S222 is made that the personal feeling map is analyzed (Step S222: Yes), the controller 21 performs processing of Step S224 described below. In a case where the determination of Step S222 is made that the personal feeling map is not analyzed yet (Step S222: No), the controller 21 generates a personal feeling map corresponding to the ID of the user included in the vehicle signal and performs control such that the personal feeling map analysis unit 28 analyzes the generated personal feeling map (Step S223).

Next, the controller 21 determines whether or not a destination is included in the vehicle signal (Step S224). In a case where the above-described determination is made that a destination is included (Step S224: Yes), the controller 21 acquires a profile corresponding to the ID of the user included in the vehicle signal from the personal information database 26, and acquires the current time from the timepiece 23. The controller 21 generates one or a plurality of general feeling maps from the general feeling database 25 and the map information stored in the map database 24 based on the acquired profile and current time (Step S225).

Next, the controller 21 calculates a traveling route from the current location of the vehicle 10 to the destination based on the acquired profile and the generated general feeling map (Step S226). Next, the controller 21 a signal indicating the route information including the calculated traveling route to the vehicle 10 through the communication unit 22 (Step S227).

In a case where the determination of Step S224 is made that a destination is not included (Step S224: No), the controller 21 extracts a feeling for the last 30 minutes and a position associated with the feeling from the general feeling database 25, and generates a general feeling map from the extracted feeling and position and the map information stored in the map database 24. Alternatively, the controller 21 may extract, for example, a feeling of a user having the same preference as the preference included in the acquired profile and a position associated with the feeling from the general feeling database 25, and generates a general feeling map from the extracted feeling and position and the map information (Step S228). Next, the controller 21 searches for a point associated with a specific feeling (for example, a positive feeling, such as "happy", or a negative feeling, such as "anger") or a point where the intensity of the specific feeling is comparatively large from the generated general feeling map while referring to the acquired profile, and determines a point by which the vehicle is recommended to pass and/or a route along which the vehicle is recommended to travel (Step S229).

Next, the controller 21 transmits a signal indicating the destination information including the point, by which the vehicle is recommended to pass, and/or the route, along which the vehicle is recommended to travel, to the vehicle 10 through the communication unit 22 (Step S230).

The "controller 101", the "display unit 104", the "personal identification unit 109", and the "personal feeling map analysis unit 28" according to the embodiment are examples of an "acquisition unit", a "presentation unit", a "recognition unit", and a "first generation unit", respectively. The "communication unit 102" according to the embodiment is an example of a "transmission unit" and a "reception unit". The "controller 21" according to the embodiment is an example of a "second generation unit" and a "search unit".

### Technical Effects

In the route information presentation system 1, the preference of the user or the like is estimated from the personal feeling map related to the user of the vehicle 10, and the traveling route according to the profile of the user is searched from the general feeling map generated based on the profile or the like including the estimated preference or the like. That is, in the route information presentation system 1, the traveling route from the current location of the vehicle 10 to the destination is searched using the personal feeling map and the general feeling map.

A feeling of an occupant on a vehicle is provoked according to the quality of scenery or traffic circumstances of a road on which the vehicle travels or in a case where the vehicle travels near a place of memories or with a special feeling. That is, it can be said that there is a causal relationship between the feeling of the occupant on the vehicle and the road (or the traveling route). For this reason, the traveling route from the current location of the vehicle 10 to the destination searched as described above is expected to be a preferred traveling route for the user of the vehicle 10. Accordingly, with the route information presentation system 1, it is possible to present an appropriate traveling route to the user of the vehicle 10.

### Modification Examples

In a case where a so-called dropping destination or dropping route is suggested because the user does not set a destination (see Steps S215 to S217 and S228 to S230), for example, the controller 21 of the center 20 may transmit, to the vehicle 10, a signal indicating the general feeling map generated from the feeling for the last 30 minutes, the position associated with the feeling, and the map information, instead of or in addition to the destination information. In this case, the controller 101 of the navigation device 100 of the vehicle 10 may display the general feeling map on the display unit 104, instead of or in addition to suggesting the destination.

With such a configuration, the user (driver) himself or herself of the vehicle 10 can drive the vehicle 10 while selecting a point associated with a specific feeling (for example, a positive feeling).

The invention is not limited to the above-described embodiment, and can be changed, if desired, without departing from the essence of the invention that can be read from the claims and the entire specification. An in-vehicle device and a route information presentation system including such changes are also intended to be within the technical scope of the invention.

An in-vehicle device (100) includes a recognition unit (109) configured to recognize a host vehicle user, an acquisition unit (101) configured to acquire a current location and a destination of the host vehicle, a transmission unit configured to transmit a first signal indicating the host vehicle user, the current location, and the destination to an external device (20) outside the host vehicle, a reception unit configured to receive a second signal indicating a traveling route from the current location to the destination from the external device, the traveling route being searched using i) a first feeling map and ii) a second feeling map in the external device, and a presentation unit (104) configured to present the traveling route indicated by the second signal.

## Claims

1. An in-vehicle device (100) comprising:
a recognition unit (109) configured to recognize a user on a host vehicle (10) as a host vehicle user ;
an acquisition unit (101) configured to acquire a current location and a destination of the host vehicle (10);
a transmission unit configured to transmit a first signal indicating the host vehicle user, the current location, and the destination to an external device (20) outside the host vehicle (10);
a reception unit configured to receive a second signal indicating a traveling route from the current location to the destination from the external device (20),
the traveling route being searched using i) a first feeling map and ii) a second feeling map in the external device (20),
the first feeling map being information generated based on feeling information corresponding to the host vehicle user among a plurality of kinds of feeling information corresponding to a plurality of users and indicating a feeling state at each of a plurality of points on a road and map information, and being information with a feeling state of the host vehicle user at each of the points on the road indicated by the feeling information corresponding to the host vehicle user associated with the map information, and
the second feeling map being information generated based on at least a part of the feeling information and the map information, and being information with a feeling state of each of the users at each of the points on the road indicated by at least a part of the feeling information associated with the map information; and
a presentation unit (104) configured to present the traveling route indicated by the second signal.

2. The in-vehicle device (100) according to claim 1, further comprising a feeling state estimation unit configured to detect a biological information of the host vehicle user and estimate a feeling state of the host vehicle user based on the detected biological information,
wherein the transmission unit is configured to further transmit a third signal indicating the estimated feeling state and information with a position of the host vehicle (10) and the host vehicle user associated with each other to the external device (20).

3. The in-vehicle device (100) according to claim 2, further comprising an in-vehicle camera configured to image the inside of a vehicle cabin of the host vehicle,
wherein the feeling state estimation unit is configured to detect a user from an image captured by the in-vehicle camera.

4. The in-vehicle device (100) according to claim 3, wherein:
the biological information includes face information of the user; and
the feeling state estimation unit is configured to recognize a facial expression of the detected user and estimate a feeling state of the host vehicle user based on a feature of the recognized facial expression.

5. The in-vehicle device (100) according to claim 3 or 4, wherein:
the biological information includes a gesture of the user; and
the feeling state estimation unit is configured to recognize a gesture of the detected user and estimate a feeling state of the host vehicle user based on a feature of the recognized gesture.

6. The in-vehicle device (100) according to any one of claims 2 to 5, further comprising a microphone configured to detect sound inside a vehicle cabin of the host vehicle, wherein:
the biological information includes speech of the user; and
the feeling state estimation unit is configured to recognize speech from sound inside the vehicle cabin detected by the microphone and estimate a feeling state of the host vehicle user based on a feature of the recognized speech.

7. The in-vehicle device (100) according to any one of claims 1 to 6, wherein the second feeling map is information with a feeling of each of the users extracted according to arbitrary conditions of a time zone, a day of the week, a season, user age, and sex associated with the map information.

8. A route information presentation system (1) comprising:
an in-vehicle device (100); and
an external device (20) provided outside a vehicle in which the in-vehicle device (100) is mounted, wherein:
the in-vehicle device (100) is configured to
recognize a user in the vehicle as a host vehicle user,
acquire a current location and a destination of the vehicle, and
transmit a first signal indicating the host vehicle user, the current location, and the destination to the external device (20);
the external device (20) includes
a feeling database configured to store a plurality of kinds of feeling information corresponding to a plurality of users and indicating a feeling state at each of a plurality of points on a road, and a map database configured to store map information;
the external device (20) is configured to
generate a first feeling map based on feeling information corresponding to the host vehicle user indicated by the first signal among the stored feeling information and the stored map information, the first feeling map being information with a feeling state of the host vehicle user at each of the points on the road indicated by the feeling information corresponding to the host vehicle user associated with the stored map information,
generate a second feeling map based on at least a part of the stored feeling information and the stored map information, the second feeling map being information with a feeling state of each of the users at each of the points on the road indicated by at least a part of the stored feeling information associated with the stored map information,
search for a traveling route from the current location indicated by the first signal to the destination indicated by the first signal using the first feeling map and the second feeling map, and
transmit a second signal indicated by the searched traveling route to the vehicle; and
the in-vehicle device (100) is further configured to present the traveling route indicated by received second signal.

9. The route information presentation system (1) according to claim 8, wherein:
the in-vehicle device (100) is configured to:
detect biological information of the host vehicle user and estimate feeling state of the host vehicle user based on the detected biological information and
transmit a third signal indicating information with the estimated feeling state associated with a position of the host vehicle (10) and the host vehicle user to the external device (20); and
the feeling database is constructed or updated by information indicated by the third signal.

10. The route information presentation system (1) according to claim 9, further comprising an in-vehicle camera configured to image the inside of a vehicle cabin of the host vehicle,
wherein the in-vehicle device (100) is configured to detect a user from an image captured by the in-vehicle camera.

11. The route information presentation system (1) according to claim 10, wherein:
the biological information is face information of the user; and
the in-vehicle device (100) is configured to recognize a facial expression of the detected user and estimate a feeling state of the host vehicle user based on a feature of the recognized facial expression.

12. The route information presentation system (1) according to claim 10 or 11, wherein:
the biological information is a gesture of the user; and
the in-vehicle device (100) is configured to recognize a gesture of the detected user and estimate a feeling state of the host vehicle user based on a feature of the recognized gesture.

13. The route information presentation system (1) according to any one of claims 9 to 12, further comprising a microphone configured to detect sound inside a vehicle cabin of the host vehicle, wherein:
the biological information is speech of the user; and
the in-vehicle device (100) is configured to recognize speech from sound inside the vehicle cabin detected by the microphone and estimate a feeling state of the host vehicle user based on a feature of the recognized speech.

14. The route information presentation system (1) according to any one of claims 9 to 13, wherein the second feeling map is information with a feeling of each of the users extracted according to arbitrary conditions of a time zone, a day of the week, a season, user age, and sex associated with the map information.
